# FASCICULE DE BREVET EUROPEEN

(11) **EP 4 603 684 B1**
(45) Date de publication et mention de la délivrance du brevet: **12.08.2026**
(21) Numéro de dépôt: 24213951.7
(22) Date de dépôt: 19.11.2024
(51) Int. Cl.: F01M 1/10, F01M 11/04, F01M 11/10, F16N 39/06, F16N 29/04, B03C 1/033, B03C 1/28, B03C 1/32

(54) **SYSTÈME MÉCANIQUE MUNI D'ÉLÉMENTS MÉCANIQUES MOBILES, D'UN BOUCHON MAGNÉTIQUE AINSI QUE D'UN SYSTÈME DE LUBRIFICATION MUNI DE FILTRES MÉCANIQUE ET MAGNÉTIQUE**
MECHANISCHES SYSTEM MIT BEWEGLICHEN MECHANISCHEN ELEMENTEN, EINEM MAGNETISCHEN STOPFEN UND EINEM SCHMIERSYSTEM MIT MECHANISCHEN UND MAGNETISCHEN FILTERN
MECHANICAL SYSTEM WITH MOVABLE MECHANICAL ELEMENTS, A MAGNETIC PLUG AND A LUBRICATION SYSTEM PROVIDED WITH MECHANICAL AND MAGNETIC FILTERS

(30) Priorité: 13.02.2024 FR 2401391
(43) Date de publication de la demande: 20.08.2025
(73) Titulaire: Airbus Helicopters, 13725 Marignane Cedex (FR)
(72) Inventeur: GOUJET, Damien, 13725 Marignane Cedex (FR)
(74) Mandataire: GPI Brevets

(56) Documents cités:
- EP-A1- 3 792 457
- CN-A- 103 452 619
- CN-U- 208 237 061
- FR-A1- 3 125 442
- RU-C1- 2 727 737
- US-A- 5 089 129

## Description

La présente invention concerne un système mécanique muni d'éléments mécaniques mobiles, d'un bouchon magnétique ainsi que d'un système de lubrification muni de filtres mécanique et magnétique.

Un système mécanique peut comprendre des éléments mécaniques mobiles à refroidir ou à lubrifier, tels que des arbres, des roulements, des éléments mécaniques de transmission de puissance voire de réduction ou d'augmentation de vitesse de rotation, des pignons, des roues, des cannelures, etc.

Par exemple, un aéronef à voilure tournante peut comprendre un rotor participant au moins partiellement à la sustentation de cet aéronef. Pour mettre en rotation un tel rotor, un système mécanique de type « boîte de transmission de puissance » peut mécaniquement relier un ou des moteurs et le rotor. Une telle boîte de transmission de puissance comporte des éléments mécaniques à lubrifier ou à refroidir.

Un tel système mécanique comporte alors un système de lubrification permettant d'acheminer un fluide lubrifiant sur des éléments mécaniques pour les lubrifier et/ou les refroidir. De tels éléments mécaniques sont dénommés « éléments mécaniques à lubrifier ou refroidir » par la suite.

Un système de lubrification connu comporte un circuit fluidique principal. Ce circuit fluidique principal comporte un fluide lubrifiant reposant dans un réservoir. Le réservoir est, par exemple, formé par le fond d'un carter du système mécanique à lubrifier ou à refroidir. De plus, le circuit fluidique est muni d'une pompe puisant le fluide dans le réservoir. La pompe déplace alors le fluide vers au moins un circuit de projection de fluide, dénommé parfois « rampe de lubrification » ou encore « rampe d'aspersion de fluide ». Le fluide est alors expulsé en dehors du circuit de projection de fluide pour atteindre les éléments mécaniques à lubrifier ou à refroidir avant de retourner par gravité dans le fond du carter. De plus, le circuit fluidique principal comporte un refroidisseur. Le terme « refroidisseur» désigne un appareil apte à abaisser la température d'un fluide, à l'inverse d'un réchauffeur.

En outre, le fluide lubrifiant peut être pollué par des polluants métalliques et magnétiques. Dès lors, le système mécanique peut comprendre des moyens de filtration mécaniques pour empêcher des polluants de grandes dimensions, par exemple de l'ordre de 10 microns et plus, d'obstruer notamment le circuit de projection de fluide et assurer la fiabilité des contacts mécaniques.

Ainsi, des crépines peuvent être agencées en amont de la pompe et/ou du circuit de projection de fluide. Le circuit fluidique principal peut aussi comporter un filtre à cartouche situé en amont du circuit de projection de fluide. Un tel filtre à cartouche comporte une cuve logeant une cartouche de filtration poreuse. Le fluide rentre dans la cuve passe au travers de l'enveloppe, puis sort du filtre. Dès lors, les particules ayant des dimensions supérieures aux ouvertures de l'enveloppe sont piégées dans la cuve.

Eventuellement, le système de lubrification comporte uniquement le circuit fluidique principal, ou comporte de plus un circuit fluidique de secours. Dans ce cas, le circuit fluidique principal et le circuit fluidique de secours peuvent être tous deux configurés pour puiser un fluide lubrifiant dans le même réservoir et pour acheminer ce fluide vers un même circuit de projection de fluide ou des circuits de projection de fluide distincts. Le circuit fluidique de secours vise à autoriser le fonctionnement du système mécanique au moins pendant une durée prédéterminée en cas de panne du circuit fluidique principal. Le circuit fluidique de secours peut s'étendre uniquement dans le carter du système mécanique pour éviter une fuite en dehors du système mécanique.

Par ailleurs, lors de son fonctionnement, le système mécanique peut générer des particules métalliques et magnétiques à la suite d'une dégradation d'au moins un de ces éléments mécaniques tournants, par exemple par écaillage des dents d'un pignon ou d'une roue dentée. Ces particules métalliques et magnétiques images d'un dysfonctionnement ont des dimensions importantes, de l'ordre du dixième de millimètre.

Pour détecter un fonctionnement anormal du système mécanique, le système mécanique comporte usuellement un bouchon magnétique amovible permettant d'isoler, d'immobiliser et de retirer les particules métalliques et magnétiques, résultant du fonctionnement anormal, tombant dans le réservoir. Le bouchon magnétique peut être relié à un alerteur afin de générer une alerte en présence d'une certaine quantité de métal capté. Un bouchon magnétique est usuellement présent au fond du réservoir et capte les particules métalliques et magnétiques tombant vers le fond de ce réservoir. Le ou les circuits fluidiques peuvent puiser le fluide lubrifiant dans le réservoir via une crépine pour ne pas aspirer ces particules métalliques et magnétiques.

Par ailleurs, le fluide lubrifiant peut être pollué par une poudre métallique et magnétique très fine. La poudre métallique et magnétique comprend des particules métalliques et magnétiques, de l'ordre de 0.5 à 3 microns environ et/ou inférieure aux perforations de la crépine précitée, en suspension dans le fluide lubrifiant. Cette poudre métallique et magnétique peut résulter de la fabrication et/ou du montage du système mécanique, par frettage et /ou serrage par exemple, ou du frottement normal des zones de contacts entre ses différents éléments mécaniques mobiles. La poudre métallique et magnétique n'a pas d'impact sur le fonctionnement du système mécanique et sur son système de lubrification en raison d'une part de sa présence attendue résultant d'un fonctionnement normal, et d'autre part des très petites dimensions des particules la constituant.

On appelle par la suite « particule métallique » les polluants métalliques et magnétiques de grandes dimensions résultant d'un dysfonctionnement ou d'une pollution issue de fabrication ou du montage, et couvre par exemple toute particule métallique et magnétique comprenant un écart supérieur à 10 microns entre deux points distincts de cette particule. L'expression « poudre métallique » désigne à l'inverse tout polluant métallique et magnétique résultant de la fabrication, du montage ou d'une usure normale et attendue du système mécanique (exemple rodage, fretting), et couvre par exemple tout polluant comprenant un écart inférieur ou égal à 10 microns entre deux points distincts de périphérie. Il est en outre possible de générer également de la « poudre métallique » avec ou sans « particules métalliques » au cours d'un dysfonctionnement.

En présence d'une poudre métallique, le système mécanique peut continuer à être utilisé jusqu'à sa prochaine maintenance, alors qu'en présence d'une certaine quantité de particules métalliques une action de maintenance prématurée est entreprise.

Or, certaines réglementations imposent la détection d'un volume réduit de particules métalliques en une durée réduite. Pour répondre à cette réglementation, un bouchon magnétique à forte capacité d'attraction magnétique peut être utilisé.

Bien qu'efficace pour capter les particules métalliques de grandes dimensions qui tombent dans le réservoir, un tel bouchon magnétique attire aussi la poudre métallique en suspension dans le fluide lubrifiant dans le réservoir. Dès lors, le bouchon magnétique est susceptible de capter rapidement une grande quantité de matière, même en présence d'une usure normale, par le biais de la poudre métallique. La circulation du fluide dans le système de lubrification tend à faire circuler la poudre métallique qui se fixe au fur et à mesure sur le bouchon magnétique. Dès lors, un bouchon magnétique à forte capacité d'attraction peut générer des fausses alarmes provoquant des actions de maintenance indues et onéreuses. Un tel bouchon magnétique présente l'avantage de détecter un éventuel écaillage et de générer une alerte en conséquence, mais présente l'inconvénient de générer une possible fausse alerte à moyen terme en raison de la captation de la poudre métallique passant à sa proximité. La présence de la poudre métallique résultant d'un fonctionnement normal peut en outre retarder la captation des particules métalliques résultant d'un dysfonctionnement.

Le document FR 3 083 283 B1 décrit un système mécanique ayant notamment un bouchon magnétique dans un réservoir, ainsi qu'un aimant dans un système de lubrification. Ce bouchon magnétique et l'aimant forment des dispositifs de captation visant à capter des particules métalliques passant à proximité. Les métaux attirés par l'aimant sont balayés par le fluide lubrifiant lorsque le système de lubrification est actif. Dès lors, ce document prévoit l'agencent d'une conduite de dérivation.

Le document FR 3 100 614 B1 décrit un système mécanique ayant notamment des bouchons magnétiques dans un réservoir et un compteur de particules.

Le document US 5089129 A décrit un équipement muni d'un filtre magnétique et d'un filtre poreux.

Le document CN 103452619 A décrit un moteur d'automobile muni d'un bouchon magnétique de drainage.

Le document CN 208237061 U décrit un système de transmission d'automobile muni d'un bouchon magnétique de drainage.

La présente invention a alors pour objet de proposer un système mécanique muni d'un système de lubrification visant à limiter le nombre de fausses alarmes générées avec un bouchon magnétique.

La présente invention concerne un système mécanique comprenant des éléments mécaniques mobiles à lubrifier ou à refroidir dans un carter, le système mécanique ayant un système de lubrification muni d'un réservoir contenant un fluide lubrifiant, le système de lubrification ayant un circuit fluidique principal s'étendant du réservoir jusqu'à un circuit de projection de fluide, le circuit fluidique principal ayant un générateur de débit et un filtre mécanique muni d'une cartouche ayant une enveloppe poreuse, le système de lubrification comportant au moins un bouchon magnétique.

Le ou les bouchons magnétiques sont en contact avec le fluide lubrifiant, au moins en fonctionnement. Ainsi, un bouchon magnétique peut être agencé, par exemple, dans le réservoir ou sur un chemin de retour parcouru par le fluide lubrifiant entre un élément à lubrifier ou à refroidir et le réservoir. Au moins un bouchon magnétique peut être en dehors du circuit fluidique principal.

Par exemple, une telle enveloppe poreuse d'un filtre mécanique peut comprendre une paroi perforée, éventuellement pliée en accordéon pour présenter une surface de filtration maximisée.

En outre, le système de lubrification peut comporter en complément au moins un circuit fluidique secondaire. Par exemple, un circuit fluidique secondaire peut former un circuit de secours usuel partiellement voire entièrement logé dans le carter, et/ou puisant le fluide lubrifiant dans le même réservoir que le circuit fluidique principal.

Par ailleurs, le circuit fluidique principal comporte un filtre magnétique traversé par le fluide lubrifiant entre le réservoir et le circuit de projection de fluide, le filtre magnétique comprenant au moins une paroi aimantée.

Dès lors, ce système mécanique va à l'encontre de préjugés en prévoyant, en complément d'un filtre mécanique à cartouche, un filtre magnétique. De manière contradictoire, le bouchon magnétique a justement pour fonction de capter les polluants métalliques et magnétiques qui sont présents dans le fluide lubrifiant après aspersion des éléments à lubrifier ou à refroidir, pour déterminer la présence éventuelle d'un dysfonctionnement. Filtrer les polluants métalliques présents dans le fluide lubrifiant apparait donc à première vue contre-productif.

Toutefois, des fausses alarmes ont été identifiées de manière innovante comme résultant de la présence d'un bouchon magnétique puissant. Ce bouchon magnétique capte efficacement les polluants métalliques et magnétiques présents dans le réservoir, y compris au fil du temps la poudre métallique très fine résultant de la fabrication et d'un fonctionnement normal. La poudre métallique captée par le bouchon magnétique peut ainsi générer une fausse alarme.

L'invention comporte aussi un bouchon magnétique à forte capacité d'attraction. En l'absence d'un dysfonctionnement, le fluide lubrifiant circule au sein du système mécanique et traverse de fait le filtre magnétique. Les polluants métalliques sont attirés contre la paroi aimantée de ce filtre magnétique.

A ce stade, les polluants résultent seulement du fonctionnement normal du système mécanique. Dès lors, la quantité de poudre métallique susceptible d'être attirée par le bouchon magnétique est de fait réduite et les risques de génération d'une fausse alarme sont réduits. Le filtre mécanique peut de son côté filtrer en particulier d'autres types de polluants, tout en étant moins encombré par les polluants métalliques par rapport à un système usuel. Le fluide lubrifiant est ainsi dépollué efficacement.

En présence d'un dysfonctionnement de type écaillage d'un élément du système mécanique, des particules métalliques de grandes dimensions tombent vers le réservoir, par gravité par exemple, et sont captées par le bouchon magnétique. Ce bouchon magnétique est de fait toujours placé en amont du filtre mécanique et du filtre magnétique au regard du sens de déplacement du fluide lubrifiant du réservoir jusqu'au circuit de projection de fluide pour limiter le risque de perdre des particules métalliques dans ces filtres.

Par suite, ce système mécanique associe un filtre magnétique à un filtre mécanique au sein du circuit fluidique principal pour au moins limiter le nombre de fausses alarmes émises par le bouchon magnétique. Il en résulte des coûts d'immobilisation et d'utilisation du système mécanique potentiellement réduits.

Le système mécanique peut de plus comporter une ou plusieurs des caractéristiques suivantes, prises seules ou en combinaison.

Selon une possibilité, le circuit fluidique principal peut comporter une crépine de filtration en amont du filtre magnétique, voire du générateur de débit.

Les termes « amont » et « aval » sont à considérer au regard du sens de circulation du fluide.

Par exemple, la crépine de filtration est agencée dans le réservoir, voire à une entrée du circuit fluidique principal.

Selon une possibilité compatible avec les précédentes, le bouchon magnétique est relié à un alerteur.

Le bouchon magnétique peut générer un signal transmis à l'alerteur. Par exemple, le bouchon magnétique peut alors fermer un circuit électrique alimentant électriquement un alerteur.

Selon une possibilité compatible avec les précédentes, le filtre magnétique peut comprendre un ralentisseur réduisant une vitesse de déplacement du fluide lubrifiant au sein du filtre magnétique par rapport à une vitesse de déplacement atteinte en entrée du filtre magnétique.

Le circuit fluidique principal tend à déplacer le fluide lubrifiant selon un débit important (par exemple supérieur à 800l/h), ce qui peut sembler favorable à la dépollution de ce fluide lubrifiant. Néanmoins, avec un tel débit, seuls les polluants métalliques et magnétiques passant à proximité de la paroi aimantée risquent d'être attirés et fixés sur cette paroi aimantée. Le ralentisseur de vitesse permet de ralentir le fluide lubrifiant dans le filtre magnétique afin d'augmenter les chances que les polluants métalliques soient attirés contre la paroi aimantée.

Selon une possibilité compatible avec les précédentes, le filtre magnétique peut comporter une cuve externe et un tube disposé au moins partiellement dans la cuve externe, un volume externe étant compris entre la cuve externe et le tube, un volume interne étant délimité par le tube et en communication avec le volume externe, le circuit fluidique principal comprenant une liaison hydraulique amont allant du réservoir jusqu'à une entrée du filtre magnétique, ladite entrée étant reliée hydrauliquement à un volume d'entrée formé par le volume externe ou le volume interne, le circuit fluidique principal comprenant une liaison hydraulique aval liant hydrauliquement au circuit de projection de fluide le volume interne ou le volume externe ne formant pas le volume d'entrée, la paroi aimantée comprenant la cuve externe ou le tube.

Eventuellement, ladite entrée présente une surface de passage d'entrée traversée par le fluide lubrifiant, et le volume externe présente une surface de passage externe ayant une aire supérieure à une aire de la surface de passage d'entrée pour former le ralentisseur évoqué précédemment.

Cette solution présente aussi l'avantage de pouvoir augmenter la surface magnétique et donc de favoriser la captation de polluants métalliques et magnétiques.

Selon une possibilité compatible avec les précédentes le tube peut être un cylindre à base circulaire.

Selon une possibilité compatible avec les précédentes, le tube peut comprendre au moins une surface de passage intermédiaire ouverte mettant en communication le volume externe et le volume interne.

Selon une première alternative de réalisation de la paroi aimantée, la paroi aimantée peut comprendre une paroi en alliage d'aluminium ou en plastique, la paroi aimantée comprenant un support fixé à cette paroi en alliage d'aluminium ou en plastique et muni d'au moins un aimant permanent.

Par exemple, un tel support prend la forme d'une chaussette, en plastique ou autre, engagée sur la paroi en alliage d'aluminium ou en plastique, cette chaussette portant au moins un aimant.

L'alliage d'aluminium présente l'avantage d'être perméable aux ondes magnétiques ce qui peut favoriser l'attraction des polluants métalliques.

Alternativement, la paroi peut être en plastique.

Utiliser un support portant un ou des aimants autour d'une paroi sensiblement non magnétique permet de récupérer facilement les polluants métalliques et magnétiques récoltés. Lorsqu'un opérateur retire le support aimanté, les polluants métalliques et magnétiques ne sont plus attirés par une force magnétique et tombent, ce qui les rend facilement récoltables. Cet arrangement permet de supprimer temporairement le magnétisme agissant sur les polluants métalliques et magnétiques.

Selon une deuxième alternative de réalisation de la paroi aimantée, la paroi aimantée peut comporter une paroi métallique accolée à au moins un aimant permanent ou comprend un barreau aimanté creux.

Cette deuxième alternative présente l'avantage de comprendre une grande surface aimantée et de présenter un rapport efficacité/ masse intéressant.

Selon un autre aspect, le circuit fluidique principal pouvant comprendre une liaison hydraulique amont allant du réservoir jusqu'à une entrée du filtre magnétique, la liaison hydraulique amont peut comporter ledit générateur de débit, la liaison hydraulique aval comprenant au moins un des équipements suivants : un réchauffeur, un refroidisseur, le filtre mécanique.

Le générateur de débit peut être situé dans ou en dehors du système mécanique.

Dès lors, le filtre magnétique peut être en aval du générateur de débit. Le filtre magnétique peut être en amont d'un réchauffeur, d'un refroidisseur, et/ou du filtre mécanique pour limiter le nombre de polluants acheminés vers ces organes et réaliser une collecte supplémentaire de particules pour caractérisation et quantification en cas de dysfonctionnement avant que celles-ci soient perdues dans le filtre mécanique et /ou le refroidisseur et/ou le réchauffeur.

Selon un autre aspect et en présence d'un filtre magnétique ayant une cuve externe et un tube, indépendamment de la manière d'obtenir la paroi aimantée et selon une première variante, le tube peut comporter la paroi aimantée.

Le tube peut être aimanté, à la place de la cuve externe pour optimiser la masse du système par exemple.

Selon une deuxième variante, la cuve externe peut comporter la paroi aimantée.

Eventuellement, le filtre magnétique et le filtre mécanique peuvent former un même filtre, ladite paroi aimantée comportant la cuve externe, le tube comprenant l'enveloppe poreuse.

Un seul même équipement fait alors office de filtre magnétique et de filtre mécanique. En outre, en utilisant en rétrofit sur un système existant la même enveloppe poreuse, le filtre peut générer la même perte de charge que précédemment.

Selon une possibilité, il est possible de disposer au moins un aimant ou une chaussette aimantée sur la cuve externe d'un filtre mécanique existant pour obtenir une paroi aimantée.

Selon un autre aspect, le filtre magnétique peut être agencé en dehors dudit carter.

Un tel agencement permet de démonter aisément le filtre magnétique si besoin. Le contenu du filtre magnétique peut être collecté et analysé pour effectuer un diagnostic de santé du système mécanique.

Selon un autre aspect, le système mécanique peut être une boîte de transmission de puissance. Outre un système mécanique, l'invention vise un aéronef comportant un tel système mécanique.

Par exemple, le système mécanique est une boîte de transmission de puissance reliée par une chaine mécanique à au moins une voilure tournante pour la mettre en rotation.

Outre un système mécanique, l'invention vise un procédé pour réduire un nombre de fausse alarme au sein d'un système mécanique comprenant des éléments mécaniques mobiles à lubrifier ou à refroidir dans un carter, le système mécanique ayant un système de lubrification muni d'un réservoir contenant un fluide lubrifiant, le système de lubrification ayant un circuit fluidique principal s'étendant du réservoir jusqu'à un circuit de projection de fluide, le circuit fluidique principal ayant un générateur de débit et un filtre mécanique muni d'une cartouche ayant une enveloppe poreuse, le système de lubrification comportant au moins un bouchon magnétique. Le bouchon magnétique peut être en contact avec le fluide lubrifiant au moins en fonctionnement, éventuellement en dehors du circuit fluidique principal, par exemple dans le réservoir ou sur un chemin de retour parcouru par le fluide lubrifiant d'un élément à lubrifier ou à refroidir jusqu'au réservoir.

Le procédé comporte les étapes suivantes :
- circulation du fluide lubrifiant dans le circuit fluidique principal, le fluide sortant par le circuit de projection de fluide et retournant dans le réservoir,
- dépollution du fluide lubrifiant circulant dans le circuit fluidique principal avec un filtre magnétique et le filtre mécanique, le filtre magnétique comprenant au moins une paroi aimantée et éventuellement un ralentisseur réduisant une vitesse de déplacement du fluide lubrifiant,
- génération d'une alerte avec le bouchon magnétique en présence de métal capté par ce bouchon magnétique.

Cette quantité minimale peut être établie par essai ou résulte d'une réglementation à respecter par exemple, telle qu'à titre d'exemple la réglementation dénommée « Certification Specification for large helicopters CS-29 » en langue Anglaise.

L'invention et ses avantages apparaîtront avec plus de détails dans le cadre de la description qui suit avec des exemples donnés à titre illustratif en référence aux figures annexées qui représentent :
la figure 1, un schéma illustrant un système mécanique selon l'invention et le procédé associé,
la figure 2, un exemple de paroi aimantée munie d'un tube métallique et d'au moins un aimant,
la figure 3, un exemple de filtre magnétique,
la figure 4, un exemple de filtre magnétique,
la figure 5, un exemple de filtre magnétique,
la figure 6, un exemple de filtre magnétique, et
la figure 7, un schéma illustrant une unité de filtration comprenant un filtre mécanique et un filtre magnétique.

Les éléments présents dans plusieurs figures distinctes sont affectés d'une seule et même référence.

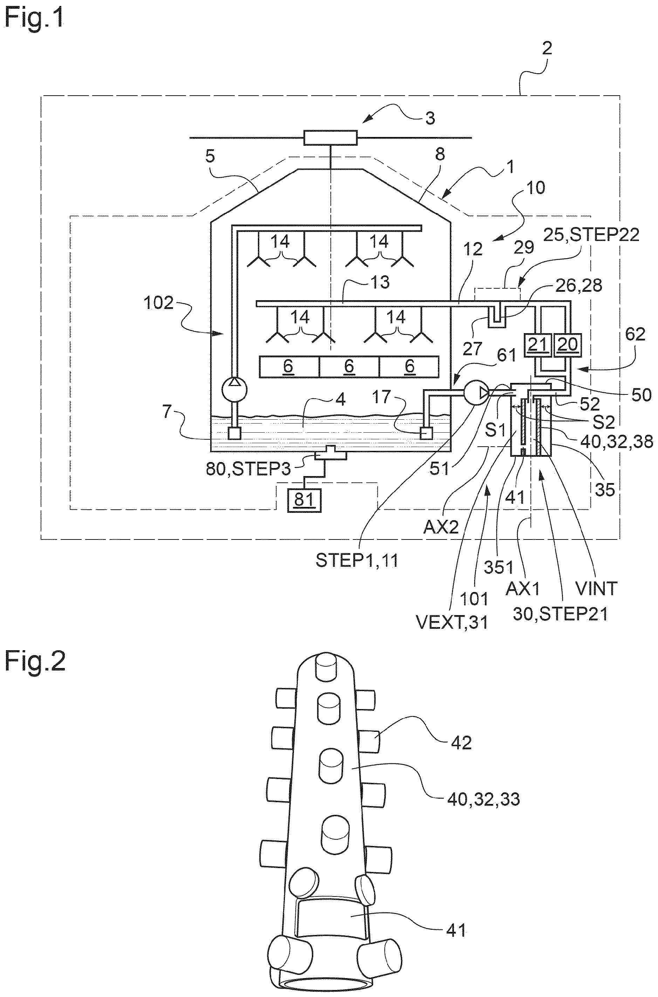

La figure 1 présente un système mécanique 1 selon l'invention. Ce système mécanique 1 peut être agencé au sein de diverses structures et par exemple au sein d'un véhicule et possiblement au sein d'un aéronef 2 selon l'exemple illustré. Le système mécanique 1 peut être une boîte de transmission de puissance 8.

Par exemple, le système mécanique 1 est agencé au sein d'un aéronef 2 pour mettre en rotation notamment un rotor 3, éventuellement via un mât rotor de sortie. Un tel rotor 3 peut être un rotor principal d'un hélicoptère, un rotor participant au contrôle du mouvement en lacet, une hélice, etc.

Quelle que soit la nature du système mécanique 1 et son agencement, ce système mécanique 1 comprend des éléments mécaniques 6 mobiles à lubrifier ou à refroidir. Ces éléments mécaniques 6 à lubrifier ou à refroidir peuvent comprendre des éléments mobiles, voire tournants, par rapport à un carter 5. Chaque élément mécanique 6 à lubrifier ou à refroidir peut comprendre, par exemple un arbre, un mécanisme à roulement à billes ou autres, un élément de transmission de puissance, un élément de réduction ou d'augmentation de vitesse de rotation, un pignon, une roue, un organe muni de cannelures, etc.

Les éléments mécaniques 6 sont disposés dans un volume interne délimité par le carter 5. Ce carter 5 peut comprendre une pluralité de sous-ensembles qui délimitent conjointement une enceinte dans laquelle sont disposés le ou les éléments mécaniques 6 à lubrifier ou à refroidir.

En outre, le système mécanique 1 comporte un système de lubrification 10. Ce système de lubrification 10 possède un réservoir 7 contenant un fluide lubrifiant 4. Par exemple, un sous-ensemble formant un fond du carter 5 forme au moins une partie du réservoir 7. Le fluide lubrifiant 4 peut être un liquide de lubrification, tel qu'un liquide comprenant de l'huile, ou tout autre liquide apte à lubrifier et/ou à refroidir un élément mécanique 6.

Le système de lubrification 10 comporte un ou plusieurs bouchons magnétiques 80, tels qu'un bouchon magnétique usuel éventuellement. Le bouchon magnétique 80 est en contact avec le fluide lubrifiant 4 dans le réservoir 7 selon l'exemple illustré. Alternativement, le bouchon magnétique 80 peut se trouver sur un chemin parcouru par le fluide lubrifiant, par exemple entre un élément mécanique 6 à lubrifier ou à refroidir et le réservoir 7. Par exemple, le bouchon magnétique 80 est fixé au fond du réservoir 7. Le bouchon magnétique 80 peut comprendre une partie réceptrice en contact avec le fluide lubrifiant 4, et au moins un moyen d'attraction magnétique afin de capter des polluants métalliques et magnétiques, et en particulier des particules métalliques résultant d'un écaillage des éléments mécaniques 6. Un tel moyen d'attraction peut comprendre un aimant permanent. Par exemple, le bouchon magnétique peut être du type du brevet EP 3627032.

De manière usuelle, le bouchon magnétique 80 est relié à un alerteur 81. Un tel alerteur 81 peut générer une alarme visuelle, par exemple par le biais de l'émission d'une lumière avec une diode électroluminescente ou un équivalent ou de l'affichage sur un écran d'un ou plusieurs caractères, d'une alarme sonore, par le biais d'un haut-parleur, et/ou d'une alarme haptique, par exemple à l'aide d'une unité vibrante faisant vibrer un organe tenu ou porté par un individu.

Pour déplacer le fluide lubrifiant 4 vers les éléments mécaniques 6, le système de lubrification 10 comprend un circuit fluidique principal 101, voire en complément au moins un circuit fluidique secondaire 102 tel qu'un circuit de secours par exemple.

Pour diriger le fluide lubrifiant 4 vers les éléments mécaniques 6 à lubrifier ou à refroidir, le circuit fluidique principal 101 s'étend du réservoir 7 jusqu'à un circuit de projection de fluide 12. Le circuit de projection de fluide 12 peut comprendre une ou plusieurs tuyauteries 13 débouchant sur au moins un moyen de projection du fluide de lubrification 14 dénommé « asperseur » par commodité. Un tel asperseur peut être par exemple un gicleur ou équivalent, un simple orifice d'un tuyau, un système mélangeant le fluide de lubrification à un gaz, etc.

De manière générale, le terme « tuyauterie » utilisé précédemment et par la suite peut représenter un unique tuyau ou une pluralité de tuyaux fixés les uns aux autres.

Plus précisément, le circuit fluidique principal 101 comporte un générateur de débit 11 afin de puiser le fluide lubrifiant dans le réservoir 7. Le générateur de débit 11 peut comprendre une pompe ou un éjecteur en communication avec une entrée d'aspiration principale plongée dans des conditions normales dans le fluide lubrifiant 4 présent dans le réservoir 7.

En aval du générateur de débit 11 et en amont du circuit de projection de fluide 12, le circuit fluidique principal 101 comporte un filtre mécanique 25. Ce filtre mécanique 25 est muni d'un dispositif de filtration ayant une cartouche 26 pourvue d'une enveloppe poreuse 28. L'enveloppe poreuse 28 peut former une paroi filtrante comprenant de petites perforations, par exemple de l'ordre de 10 à 25 micromètres voire moins. La cartouche 25 peut être disposée dans une enceinte 27. Le fluide lubrifiant 4 à filtrer pénètre dans le dispositif de filtration et rejoint le volume disposé entre l'enceinte 27 et l'enveloppe poreuse 28, traverse cette enveloppe poreuse 28, puis sort filtré du dispositif de filtration. Eventuellement, le filtre mécanique 25 comporte un conduit de contournement 29 pour contourner le dispositif de filtration, par exemple lorsque ce dispositif de filtration est obstrué.

Eventuellement, le circuit fluidique principal 101 peut comporter un réchauffeur 20 et/ou un refroidisseur 21. Selon un exemple, un refroidisseur 21 peut comprendre un échangeur thermique. Un tel échangeur thermique peut être un radiateur ou équivalent balayé par de l'air mis en mouvement par un ventilateur. Selon un exemple un réchauffeur peut comprendre une résistance électrique.

Par ailleurs, le circuit fluidique principal 101 comporte un filtre magnétique 30 traversé par le fluide lubrifiant 4. Ce filtre magnétique 30 est agencé entre le réservoir 7 et le circuit de projection de fluide 12. Dès lors, le filtre magnétique 30 est relié par une liaison hydraulique amont 61 au réservoir 7 et par une liaison hydraulique aval 62 au circuit de projection de fluide 12. Eventuellement, le circuit fluidique principal 101 comporte une crépine de filtration 17 en amont du filtre magnétique 30. Selon un exemple, l'entrée d'aspiration principale est munie de cette crépine de filtration 17. La crépine de filtration 17 peut être dimensionnée pour filtrer de gros polluants, tels que des rondelles ou des écrous afin de protéger le générateur de débit 11, voire pour filtrer les particules métalliques résultant d'un fonctionnement anormal, mais ne permet pas filtrer la poudre métallique résultant d'un fonctionnement normal. Toute particule métallique à filtrer peut avoir une distance entre deux points de sa surface extérieure supérieure à un seuil, tout distance entre deux points de la surface extérieure de chaque particule de la poudre métallique étant inférieure ou égale à ce seuil. Par exemple, le seuil est égal à 10 microns, les particules métalliques ayant des dimensions usuellement comprises entre 0.4 et 1.5 millimètres et les éléments de la poudre métallique ayant usuellement des dimensions inférieures à 3 microns.

Le générateur de débit 11, le filtre magnétique 30, le réchauffeur 20, le refroidisseur 21 et/ou le filtre mécanique 25 peuvent être agencés en dehors du carter 5.

Par ailleurs, le filtre magnétique 30 comprend au moins une paroi aimantée 32, voire un ralentisseur 31 réduisant une vitesse de déplacement du fluide lubrifiant 4 au sein du filtre magnétique 30 par rapport à une vitesse de déplacement atteinte en entrée du filtre magnétique 30.

Par exemple, le filtre magnétique 30 comporte une cuve externe 35 et un tube 40, éventuellement au moins partiellement disposé dans la cuve externe 35, ainsi qu'un raccord d'entrée 51 formant une entrée connectée à la liaison hydraulique amont 61 et un raccord de sortie 52 formant une sortie connectée à la liaison hydraulique aval 62.

Par exemple, la cuve externe 35 et le tube 40 peuvent être connectés à un couvercle 50 qui comprend le raccord d'entrée 51 et le raccord de sortie 52.

Le fluide lubrifiant 4 pénètre ainsi dans le filtre magnétique 30 par une surface de passage d'entrée S1 de l'entrée. La surface de passage d'entrée S1 est selon l'exemple illustré à considérer dans un plan perpendiculaire au sens de déplacement du fluide lubrifiant 4. La surface de passage d'entrée S1 peut représenter la plus petite surface de passage obtenue en coupant le raccord d'entrée 51 avec un plan.

Le filtre magnétique 30 comprend un volume d'entrée en liaison hydraulique avec la surface de passage d'entrée S1. Ce volume d'entrée peut être un volume externe VEXT compris entre la cuve externe 35 et le tube 40 ou le volume interne VINT délimité par le tube 40. Le volume externe VEXT ou le volume interne VINT ne formant pas le volume d'entrée est en liaison hydraulique avec le raccord de sortie 52.

Dès lors, selon l'exemple de la figure 1, la liaison hydraulique amont 61 relie hydrauliquement le réservoir 7 au volume externe VEXT, via le couvercle 50 éventuellement, et la liaison hydraulique aval 62 relie hydrauliquement le volume interne VINT au circuit de projection de fluide 12, éventuellement via le couvercle 50.

Le ralentisseur de vitesse de fluide 31 peut être formé par une surface de passage élargie. Ainsi, le volume externe VEXT, peut comprendre une surface de passage externe S2 ayant une aire supérieure à l'aire de la surface de passage d'entrée S1. La surface de passage externe S2 est à considérer dans un plan perpendiculaire au sens de déplacement du fluide lubrifiant 4, et à l'axe d'extension AX1 selon l'exemple illustré. La surface de passage externe S2 peut représenter la plus petite surface de passage obtenue en coupant le volume VEXT avec un plan.

Par ailleurs, le filtre magnétique 30 comporte au moins une surface de passage intermédiaire 41 mettant en communication hydraulique le volume externe VEXT et le volume interne VINT. Selon l'exemple de la figure 1, le tube 40 repose sur un fond 351 de la cuve externe 35 et s'étend le long d'un axe d'extension AX1 à partir de ce fond 351 de la cuve externe 35. Chaque surface de passage intermédiaire 41 peut alors être traversée par un axe radial AX2 perpendiculaire à l'axe d'extension AX1, favorablement à proximité du fond 351 pour s'assurer que le fluide lubrifiant 4 circule le long de la totalité de la cuve externe 35 et du tube 40.

Par exemple, le tube 40 est un cylindre à base circulaire. Par exemple, un anneau de ce cylindre comporte une ou plusieurs ouvertures formant une ou plusieurs surfaces de passage intermédiaire 41.

Par ailleurs, le filtre magnétique 30 possède une paroi aimantée 32. Cette paroi aimantée 32 comprend la cuve externe 35 ou le tube 40 selon la réalisation.

Selon l'exemple de la figure 1, le tube 40 forme la paroi aimantée 32 en comprenant un barreau 38 aimanté creux. Un tel barreau 38 peut comprendre un demi-cylindre formant un pôle nord et un demi-cylindre formant un pôle sud. Alternativement, la cuve externe 35 peut comprendre un tel barreau 38 aimanté creux.

Selon l'exemple de la figure 2, la paroi aimantée 32 comporte une paroi métallique 33 accolée à un ou des aimants permanents 42, au moins un aimant permanent pouvant éventuellement s'étendre dans le fluide lubrifiant. Selon cette figure 2, la paroi métallique 33 forme le tube 40. Alternativement, la paroi aimantée 32 forme la cuve externe 35.

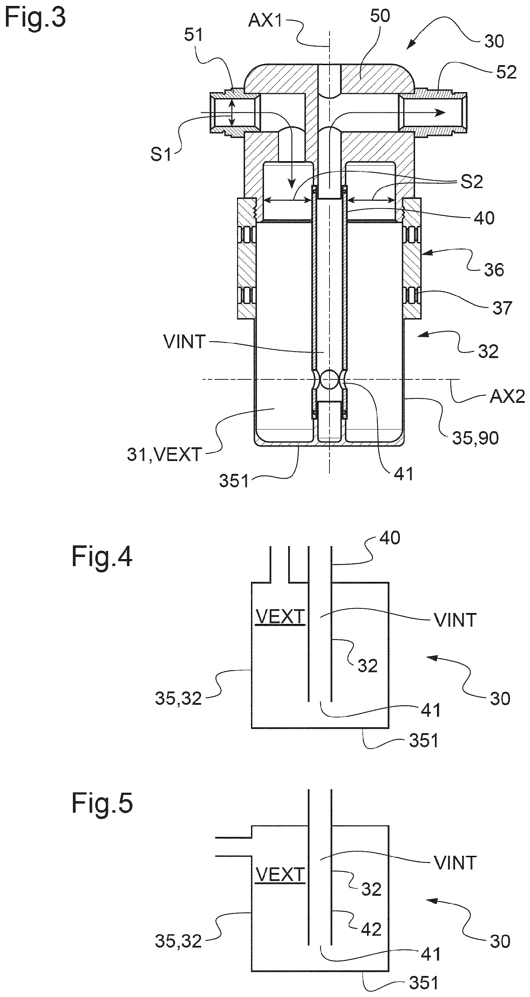

Selon l'exemple de la figure 3, la paroi aimantée 32 comporte une paroi 90 en alliage d'aluminium. Dès lors, la paroi aimantée 32 comprend un support 36 fixé à cette paroi 90 en alliage d'aluminium, par vissage, collage, ou autres. Le support 36 porte alors un ou des aimants permanents 37. Selon cette figure 3, la paroi métallique 33 forme la cuve externe 35. Alternativement, la paroi aimantée 32 forme le tube 40.

Les figures 4 à 6 illustrent diverses réalisations alternatives. Dans chacune des réalisations illustrées, la cuve externe 35 peut être reliée à la liaison hydraulique amont 61 et le tube 40 est relié à la liaison hydraulique aval 62, ou inversement.

Selon les exemples des figures 4 et 5, le tube 40 s'étend dans la cuve externe 35 sans toucher le fond, contrairement aux exemples des figures 1 et 3. Le tube 40 et/ ou la cuve externe 35 peuvent comprendre une paroi aimantée 32.

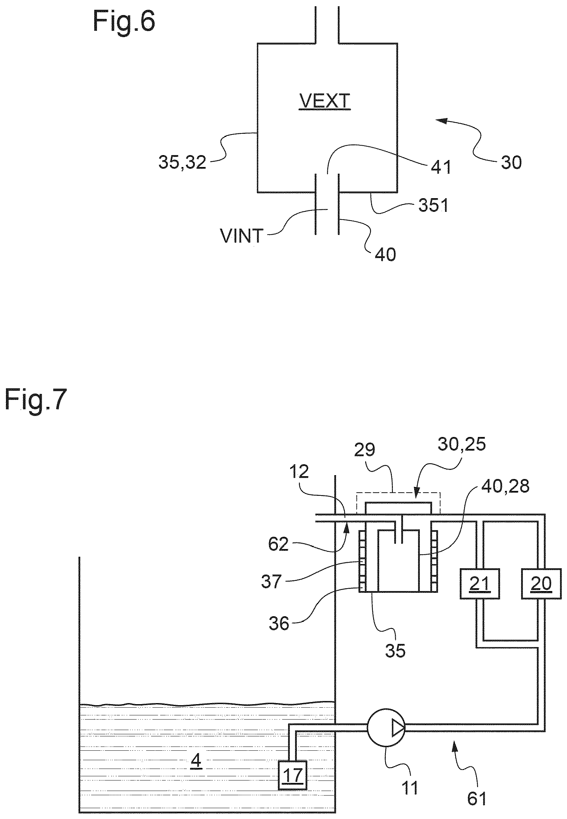

Selon l'exemple de la figure 6, la cuve externe 35 comprend une paroi aimantée 32.

Tel qu'illustré sur la figure 1 avec des filtres magnétiques de ces types, la liaison hydraulique amont 61 comporte le générateur de débit 11 relié par une tuyauterie au filtre magnétique 30. La liaison hydraulique aval 62 comporte une tuyauterie partant du filtre magnétique 30 et rejoignant le réchauffeur 20 et/ou le refroidisseur 21 éventuels, puis une tuyauterie partant du réchauffeur 20 et/ou le refroidisseur 21 éventuels et rejoignant le filtre mécanique 25.

Selon l'exemple de la figure 7, le filtre magnétique 30 et le filtre mécanique 25 forment une même unité de filtration.

Dans ce cas, la liaison hydraulique amont 61 peut selon un exemple comporter le générateur de débit 11 relié par une tuyauterie au réchauffeur 20 et/ou au refroidisseur 21 éventuels, puis une tuyauterie partant du réchauffeur 20 et/ou du refroidisseur 21 éventuels et rejoignant le volume externe de l'unité de filtration. La liaison hydraulique aval 62 comporte un raccord reliant l'unité de filtration et le circuit de projection de fluide 12. Un agencement en lieu et place du filtre magnétique de la figure 1 est aussi possible.

Par ailleurs, la paroi aimantée 32 comporte la cuve externe 35. Cette cuve externe 35 peut alors comprendre un barreau 38 aimanté creux, une paroi métallique accolée à un ou des aimants permanents, ou une paroi en alliage d'aluminium accolée à un support portant un ou des aimants permanents.

En outre, le tube 40 comprend l'enveloppe poreuse 28.

Le procédé mis en œuvre selon l'invention est expliqué ci-dessous sur la base de la réalisation de la figure 1, sachant que les autres réalisations décrites fonctionnent de manière similaire.

Ce procédé comporte la mise en circulation STEP1 du fluide lubrifiant 4 dans le circuit fluidique principal 101. A la sortie du circuit fluidique principal 101, le fluide lubrifiant 4 est éjecté par le circuit de projection de fluide 12 et retourne dans le réservoir 7 par gravité par exemple.

De plus, le procédé comporte une étape de dépollution STEP21, STEP22 du fluide lubrifiant 4 circulant dans le circuit fluidique principal 101 avec le filtre magnétique 30 et le filtre mécanique 25.

Selon l'exemple de la figure 1, le fluide lubrifiant 4 contenant de la poudre métallique pénètre dans le volume d'entrée, ce volume d'entrée étant formé par le volume externe VEXT selon l'exemple. La vitesse de déplacement du fluide lubrifiant 4 est éventuellement réduite en raison de la surface de passage S2 du volume externe VEXT supérieure à la surface de passage d'entrée S1. La paroi aimantée 32 attire cette poudre métallique. La limitation de la vitesse de déplacement du fluide lubrifiant 4 tend aussi à limiter un arrachage de la poudre métallique de la paroi aimantée 31. Eventuellement, à l'issue d'une phase d'utilisation du système mécanique 1, le filtre magnétique 30 peut être nettoyé, d'autant plus facilement quand ce filtre magnétique 30 est situé en dehors du carter 5. Le fluide lubrifiant 4 est en outre aussi filtré par la suite par l'enveloppe poreuse 28. Les polluants récoltés lors du nettoyage peuvent servir à évaluer l'état du système mécanique.

Ainsi, les filtres magnétique 30 et mécanique 25 permettent de dépolluer le fluide lubrifiant 4. Le bouchon magnétique 80 capte alors peu de poudres magnétiques.

Si un élément mécanique 6 se dégrade, des particules magnétiques tombent ou parviennent dans le réservoir 7. La crépine de filtration 17 éventuelle peut empêcher ces particules magnétiques d'entrer dans le filtre magnétique 30 voire dans le circuit fluidique principal 101. En outre, les particules magnétiques sont captées par le bouchon magnétique 80. Ce bouchon magnétique 80 peut générer un signal transmis à l'alerteur 81 pour générer une alerte STEP3 en présence d'une quantité minimale de métal captée par ce bouchon magnétique 80.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Système mécanique (1) comprenant des éléments mécaniques (6) mobiles à lubrifier ou à refroidir dans un carter (5), le système mécanique (1) ayant un système de lubrification (10) muni d'un réservoir (7) contenant un fluide lubrifiant (4), le système de lubrification (10) ayant un circuit fluidique principal (101) s'étendant du réservoir (7) jusqu'à un circuit de projection de fluide (12), le circuit fluidique principal (101) ayant un générateur de débit (11) et un filtre mécanique (25) muni d'une cartouche (26) ayant une enveloppe poreuse (28), le système de lubrification (10) comportant un bouchon magnétique (80),
**caractérisé en ce que** le circuit fluidique principal (101) comporte un filtre magnétique (30) traversé par le fluide lubrifiant (4) entre le réservoir (7) et le circuit de projection de fluide (12), le filtre magnétique (30) comprenant au moins une paroi aimantée (32), le bouchon magnétique (80) étant relié à un alerteur (81) pour générer une alerte en présence de métal capté par ce bouchon magnétique (80).

2. Système mécanique selon la revendication 1,
**caractérisé en ce que** le filtre magnétique (30) comprend un ralentisseur (31) réduisant une vitesse de déplacement du fluide lubrifiant (4) au sein du filtre magnétique (30) par rapport à une vitesse de déplacement atteinte en entrée du filtre magnétique (30).

3. Système mécanique selon l'une quelconque des revendications 1 à 2
**caractérisé en ce que** le filtre magnétique (30) comporte une cuve externe (35) et un tube (40) disposé au moins partiellement dans la cuve externe (35), un volume externe (VEXT) étant compris entre la cuve externe (35) et le tube (40), un volume interne (VINT) étant délimité par le tube (40) et en communication avec le volume externe (VEXT), le circuit fluidique principal (101) comprenant une liaison hydraulique amont (61) allant du réservoir jusqu'à une entrée du filtre magnétique (30) , ladite entrée étant reliée hydrauliquement à un volume d'entrée formé par le volume externe (VEXT) ou le volume interne (VINT), le circuit fluidique principal (101) comprenant une liaison hydraulique aval (62) liant hydrauliquement au circuit de projection de fluide (12) le volume interne (VINT) ou le volume externe (VEXT) ne formant pas le volume d'entrée, la paroi aimantée (32) comprenant la cuve externe (35) ou le tube (40).

4. Système mécanique selon les revendications 2 et 3,
**caractérisé en ce que** ladite entrée présente une surface de passage d'entrée (S1) traversée par le fluide lubrifiant, le volume externe (VEXT) présente une surface de passage externe (S2) ayant une aire supérieure à une aire de la surface de passage d'entrée (S1) pour former ledit ralentisseur (31).

5. Système mécanique selon l'une quelconque des revendication 3 à 4,
**caractérisé en ce que** le tube (40) comprend au moins une surface de passage intermédiaire (41) ouverte mettant en communication le volume externe (VEXT) et le volume interne (VINT).

6. Système mécanique selon l'une quelconque des revendications 3 à 5,
**caractérisé en ce que** le tube (40) comporte ladite paroi aimantée (32).

7. Système mécanique selon l'une quelconque des revendications 3 à 4,
**caractérisé en ce que** le filtre magnétique (30) et le filtre mécanique (25) forment un même filtre, ladite paroi aimantée (32) comportant la cuve externe (35), le tube (40) comprenant l'enveloppe poreuse (28).

8. Système mécanique selon l'une quelconque des revendications 1 à 7,
**caractérisé en ce que** la paroi aimantée (32) comporte une paroi (90) en alliage d'aluminium ou en plastique, la paroi aimantée (32) comprenant un support (36) fixé à cette paroi (90) en alliage d'aluminium ou en plastique et muni d'au moins un aimant permanent (37).

9. Système mécanique selon l'une quelconque des revendications 1 à 7,
**caractérisé en ce que** ladite paroi aimantée (32) comporte une paroi métallique (33) accolée à au moins un aimant permanent (42) ou comprend un barreau aimanté (38) creux.

10. Système mécanique selon l'une quelconque des revendications 1 à 9,
**caractérisé en ce que** le circuit fluidique principal (101) comprenant une liaison hydraulique amont (61) allant du réservoir jusqu'à une entrée du filtre magnétique (30), le filtre magnétique (30) étant relié par une liaison hydraulique aval (62) au circuit de projection de fluide (12), la liaison hydraulique amont (61) comporte ledit générateur de débit (11), la liaison hydraulique aval (62) comprenant au moins un des équipements suivants : un réchauffeur (20), un refroidisseur (21), le filtre mécanique (25).

11. Système mécanique selon l'une quelconque des revendications 1 à 10,
**caractérisé en ce que** le filtre magnétique (30) est agencé en dehors dudit carter (5).

12. Système mécanique selon l'une quelconque des revendications 1 à 11,
**caractérisé en ce que** le système mécanique (1) est une boîte de transmission de puissance (8).

13. Aéronef (2),
**caractérisé en ce que** ledit aéronef (5) comporte un système mécanique (1) selon l'une quelconque des revendications 1 à 12.

14. Procédé pour réduire un nombre de fausse alarme au sein d'un système mécanique (1) comprenant des éléments mécaniques (6) mobiles à lubrifier ou à refroidir dans un carter (5), le système mécanique (1) ayant un système de lubrification (10) muni d'un réservoir (7) contenant un fluide lubrifiant (4), le système de lubrification (10) ayant un circuit fluidique principal (101) s'étendant du réservoir (7) jusqu'à un circuit de projection de fluide (12), le circuit fluidique principal (101) ayant un générateur de débit (11) et un filtre mécanique (25) muni d'une cartouche (26) ayant une enveloppe poreuse (28), le système de lubrification comportant au moins un bouchon magnétique (80),
**caractérisé en ce que** le procédé comporte les étapes suivantes :
- circulation du fluide lubrifiant (4) dans le circuit fluidique principal (101), le fluide lubrifiant sortant par le circuit de projection de fluide (12) et retournant dans le réservoir (7),
- dépollution du fluide lubrifiant (4) circulant dans le circuit fluidique principal (101) avec un filtre magnétique (30) et le filtre mécanique (25),
- génération d'une alerte avec le bouchon magnétique (80) en présence de métal capté par ce bouchon magnétique (80).

## Patentansprüche

1. Mechanisches System (1) mit zu schmierenden oder zu kühlenden beweglichen mechanischen Elementen (6) in einem Gehäuse (5), wobei das mechanische System (1) ein Schmiersystem (10) aufweist, das mit einem Behälter (7) ausgestattet ist, der ein Schmierfluid (4) enthält, wobei das Schmiersystem (10) einen Hauptfluidkreislauf (101) aufweist, der sich vom Behälter (7) bis zu einem Fluidausstoßkreislauf (12) erstreckt, wobei der Hauptfluidkreislauf (101) einen Durchsatzerzeuger (11) und einen mechanischen Filter (25) aufweist, der mit einer Kartusche (26) mit einem porösen Gehäuse (28) ausgestattet ist, wobei das Schmiersystem (10) einen magnetischen Stopfen (80) umfasst,
**dadurch gekennzeichnet, dass** der Hauptfluidkreislauf (101) einen vom Schmierfluid (4) durchströmten Magnetfilter (30) zwischen dem Behälter (7) und dem Fluidausstoßkreislauf (12) umfasst, dass der Magnetfilter (30) mindestens eine magnetisierte Wand (32) umfasst, und dass der magnetische Stopfen (80) mit einem Warnsignalgeber (81) verbunden ist, um in Gegenwart von durch diesen magnetischen Stopfen (80) aufgefangenem Metall ein Warnsignal auszugeben.

2. Mechanisches System nach Anspruch 1,
**dadurch gekennzeichnet, dass** der magnetische Filter (30) einen Drosselkörper (31) umfasst, der die Strömungsgeschwindigkeit des Schmiermittels (4) innerhalb des magnetischen Filters (30) im Vergleich zu einer am Eingang des magnetischen Filters (30) erreichten Strömungsgeschwindigkeit verringert.

3. Mechanisches System nach einem der Ansprüche 1 bis 2,
**dadurch gekennzeichnet, dass** der magnetische Filter (30) einen Außenbehälter (35) und ein zumindest teilweise in dem Außenbehälter (35) angeordnetes Rohr (40) umfasst, dass zwischen dem Außenbehälter (35) und dem Rohr (40) ein Außenvolumen (VEXT) gebildet ist, dass ein Innenvolumen (VINT) durch das Rohr (40) begrenzt ist und mit dem Außenvolumen (VEXT) in Verbindung steht, dass der Hauptfluidkreislauf (101) eine stromaufwärtige hydraulische Verbindung (61) umfasst, die vom Behälter zu einem Einlass des magnetischen Filters (30) führt, dass der Einlass mit einem durch das Außenvolumen (VEXT) oder das Innenvolumen (VINT) gebildeten Einlassvolumen hydraulisch verbunden ist, dass der Hauptfluidkreislauf (101) eine stromabwärtige hydraulische Verbindung (62) umfasst, die dasjenige von Innenvolumen (VINT) oder Außenvolumen (VEXT), das nicht das Einlassvolumen bildet, hydraulisch mit dem Fluidausstoßkreislauf (12) verbindet, und dass die magnetisierte Wand (32) den Außenbehälter (35) oder das Rohr (40) umfasst.

4. Mechanisches System nach den Ansprüchen 2 und 3,
**dadurch gekennzeichnet, dass** der Einlass eine vom Schmierfluid durchströmte Einlassdurchflussfläche (S1) aufweist, und das Außenvolumen (VEXT) eine Außendurchflussfläche (S2) aufweist, deren Fläche größer ist als die Fläche der Einlassdurchflussfläche (S1), um den Drosselkörper (31) zu bilden.

5. Mechanisches System nach einem der Ansprüche 3 bis 4,
**dadurch gekennzeichnet, dass** das Rohr (40) mindestens eine offene Zwischendurchflussfläche (41) umfasst, die das Außenvolumen (VEXT) und das Innenvolumen (VINT) miteinander verbindet.

6. Mechanisches System nach einem der Ansprüche 3 bis 5,
**dadurch gekennzeichnet, dass** das Rohr (40) die magnetisierte Wand (32) umfasst.

7. Mechanisches System nach einem der Ansprüche 3 bis 4,
**dadurch gekennzeichnet, dass** der magnetische Filter (30) und der mechanische Filter (25) ein und denselben Filter bilden, wobei die magnetisierte Wand (32) den Außenbehälter (35) umfasst und das Rohr (40) die poröse Hülle (28) umfasst.

8. Mechanisches System nach einem der Ansprüche 1 bis 7,
**dadurch gekennzeichnet, dass** die magnetisierte Wand (32) eine Wand (90) aus einer Aluminiumlegierung oder aus Kunststoff umfasst, wobei die magnetisierte Wand (32) einen Träger (36) umfasst, der an dieser Wand (90) aus Aluminiumlegierung oder Kunststoff befestigt und mit mindestens einem Permanentmagneten (37) versehen ist.

9. Mechanisches System nach einem der Ansprüche 1 bis 7,
**dadurch gekennzeichnet, dass** die magnetisierte Wand (32) eine Metallwand (33) umfasst, an der mindestens ein Permanentmagnet (42) angebracht ist, oder einen hohlen Magnetstab (38) aufweist.

10. Mechanisches System nach einem der Ansprüche 1 bis 9,
**dadurch gekennzeichnet, dass** der Hauptfluidkreislauf (101) eine stromaufwärtige hydraulische Verbindung (61) umfasst, die vom Behälter zu einem Einlass des magnetischen Filters (30) führt, wobei der magnetische Filter (30) über eine stromabwärtige hydraulische Verbindung (62) mit dem Fluidausstoßkreislauf (12) verbunden ist, wobei die stromaufwärtige hydraulische Verbindung (61) den Durchsatzerzeuger (11) umfasst und die stromabwärtige hydraulische Verbindung (62) mindestens eines von einem Erhitzer (20), einem Kühler (21) oder dem mechanischen Filter (25) umfasst.

11. Mechanisches System nach einem der Ansprüche 1 bis 10,
**dadurch gekennzeichnet, dass** der magnetische Filter (30) außerhalb des Gehäuses (5) angeordnet ist.

12. Mechanisches System nach einem der Ansprüche 1 bis 11,
**dadurch gekennzeichnet, dass** das mechanische System (1) ein Kraftübertragungsgetriebe (8) ist.

13. Luftfahrzeug (2),
**dadurch gekennzeichnet, dass** das Luftfahrzeug (2) ein mechanisches System (1) nach einem der Ansprüche 1 bis 12 umfasst.

14. Verfahren zur Verringerung der Anzahl von Fehlalarmen in einem mechanischen System (1), das zu schmierende oder zu kühlende bewegliche mechanische Elemente (6) in einem Gehäuse (5) umfasst, wobei das mechanische System (1) ein Schmiersystem (10) aufweist, das mit einem Behälter (7) ausgestattet ist, der ein Schmierfluid (4) enthält, wobei das Schmiersystem (10) einen Hauptfluidkreislauf (101) aufweist, der sich vom Behälter (7) bis zu einem Fluidausstoßkreislauf (12) erstreckt, wobei der Hauptfluidkreislauf (101) einen Durchsatzerzeuger (11) und einen mechanischen Filter (25) aufweist, der mit einer Kartusche (26) mit einem porösen Gehäuse (28) ausgestattet ist, wobei das Schmiersystem mindestens einen magnetischen Stopfen (80) umfasst,
**dadurch gekennzeichnet, dass** das Verfahren die folgenden Schritte umfasst:
- Umwälzen des Schmiermittels (4) im Hauptfluidkreislauf (101), wobei das Schmiermittel über den Fluidausstoßkreislauf (12) austritt und in den Behälter (7) zurückfließt,
- Reinigen des im Hauptfluidkreislauf (101) zirkulierenden Schmiermittels (4) mit einem magnetischen Filter (30) und dem mechanischen Filter (25),
- Auslösen eines Alarms durch den magnetischen Stopfen (80) in Gegenwart von von dem magnetischen Stopfen (80) aufgefangenen Metallpartikeln.

## Claims

1. Mechanical system (1) comprising moveable mechanical elements (6) to be lubricated or cooled in a casing (5), the mechanical system (1) having a lubrication system (10) provided with a reservoir (7) containing a lubricating fluid (4), the lubrication system (10) having a main fluid circuit (101) extending from the reservoir (7) to a fluid projection circuit (12), the main fluid circuit (101) having a flow rate generator (11) and a mechanical filter (25) provided with a cartridge (26) having a porous envelope (28), the lubrication system (10) comprising a magnetic plug (80),
**characterised in that** the main fluid circuit (101) comprises a magnetic filter (30) passed through by the lubricating fluid (4) between the reservoir (7) and the fluid projection circuit (12), the magnetic filter (30) comprising at least one magnetised wall (32), the magnetic plug (80) being connected to an alerter (81) to generate a metal presence alert captured by this magnetic plug (80).

2. Mechanical system according to claim 1,
**characterised in that** the magnetic filter (30) comprises a decelerator (31) reducing a movement speed of the lubricating fluid (4) within the magnetic filter (30) with respect to a movement speed reached at the inlet of the magnetic filter (30).

3. Mechanical system according to any one of claims 1 to 2,
**characterised in that** the magnetic filter (30) comprises an external tank (35) and a tube (40) disposed at least partially in the external tank (35), an external volume (VEXT) being comprised between the external tank (35) and the tube (40), an internal volume (VINT) being delimited by the tube (40) and in communication with the external volume (VEXT), the main fluid circuit (101) comprising an upstream hydraulic connection (61) going from the reservoir to an inlet of the magnetic filter (30), said inlet being hydraulically connected to an inlet volume formed by the external volume (VEXT) or the internal volume (VINT), the main fluid circuit (101) comprising a downstream hydraulic connection (62) hydraulically connecting the internal volume (VINT) or the external volume (VEXT) not forming the inlet volume to the fluid projection circuit (12), the magnetised wall (32) comprising the external tank (35) or the tube (40).

4. Mechanical system according to claims 2 and 3,
**characterised in that** said inlet has an inlet passage surface (S1) passed through by the lubricating fluid, the external volume (VEXT) has an external passage surface (S2) having an area greater than an area of the inlet passage surface (S1) to form said decelerator (31).

5. Mechanical system according to any one of claims 3 to 4,
**characterised in that** the tube (40) comprises at least one open intermediate passage surface (41) communicating the external volume (VEXT) and the internal volume (VINT).

6. Mechanical system according to any one of claims 3 to 5,
**characterised in that** the tube (40) comprises said magnetised wall (32).

7. Mechanical system according to any one of claims 3 to 4,
**characterised in that** the magnetic filter (30) and the mechanical filter (25) form one same filter, said magnetised wall (32) comprising the external tank (35), the tube (40) comprising the porous envelope (28).

8. Mechanical system according to any one of claims 1 to 7,
**characterised in that** the magnetised wall (32) comprises an aluminium alloy or plastic wall (90), the magnetised wall (32) comprising a support (36) fixed to this aluminium alloy or plastic wall (90) and provided with at least one permanent magnet (37).

9. Mechanical system according to any one of claims 1 to 7,
**characterised in that** said magnetised wall (32) comprises a metal wall (33) welded to at least one permanent magnet (42) or comprises a hollow magnetised bar (38).

10. Mechanical system according to any one of claims 1 to 9,
**characterised in that** the main fluid circuit (101) comprising an upstream hydraulic connection (61) going from the reservoir to an inlet of the magnetic filter (30), the magnetic filter (30) being connected by a downstream hydraulic connection (62) to the fluid projection circuit (12), the upstream hydraulic connection (61) comprises said flow rate generator (11), the downstream hydraulic connection (62) comprising at least one of the following pieces of equipment: a heater (20), a cooler (21), the mechanical filter (25).

11. Mechanical system according to any one of claims 1 to 10,
**characterised in that** the magnetic filter (30) is arranged outside of said casing (5).

12. Mechanical system according to any one of claims 1 to 11,
**characterised in that** the mechanical system (1) is a power transmission box (8).

13. Aircraft (2),
**characterised in that** said aircraft (5) comprises a mechanical system (1) according to any one of claims 1 to 12.

14. Method for reducing a number of false alarms within a mechanical system (1) comprising moveable mechanical elements (6) to be lubricated or cooled in a casing (5), the mechanical system (1) having a lubrication system (10) provided with a reservoir (7) containing a lubricating fluid (4), the lubrication system (10) having a main fluid circuit (101) extending from the reservoir (7) to a fluid projection circuit (12), the main fluid circuit (101) having a flow rate generator (11) and a mechanical filter (25) provided with a cartridge (26) having a porous envelope (28), the lubrication system comprising at least one magnetic plug (80),
**characterised in that** the method comprises the following steps:
- circulating the lubricating fluid (4) in the main fluid circuit (101), the lubricating fluid exiting through the fluid projection circuit (12) and returning into the reservoir (7),
- depolluting the lubricating fluid (4) circulating in the main fluid circuit (101) with a magnetic filter (30) and the mechanical filter (25),
- generating an alert with the magnetic plug (80) in the presence of metal captured by this magnetic plug (80).
